# EUROPEAN PATENT SPECIFICATION

(11) **EP 2 595 268 B1**
(45) Date of publication and mention of the grant of the patent: **04.01.2017**
(21) Application number: 11189614.8
(22) Date of filing: 17.11.2011
(51) Int. Cl.: H02J 4/00, H02J 9/00

(54) **Minimal interruption DC power supply**
Gleichstromversorgung mit minimaler Unterbrechung
Alimentation électrique CC à interruption minimale

(43) Date of publication of application: 22.05.2013
(73) Proprietor: Hamilton Sundstrand Corporation, Windsor Locks, CT 06096-1010 (US)
(72) Inventor: Oldenburg, Wayne H., Theodosia, MO 65761 (US); Sims, Cecil W., Capron, IL 61012 (US)
(74) Representative: Hughes, Andrea Michelle

(56) References cited:
- EP-A2- 1 973 018
- US-A- 5 138 184
- US-A- 5 764 502
- US-A1- 2009 189 455

## Description

### BACKGROUND

The present disclosure is directed generally to DC power distribution systems, and particularly to a minimal interruption DC power supply system.

As with many vehicles, aircraft often include electrical components that have a relatively long startup sequence that must be performed prior to normal operation of the electrical components. These components can be utilized in flight controls, or other systems within the aircraft. If power to these systems is interrupted for longer than a brief period, the systems can shutdown. When the systems shut down, the startup sequence must be performed again after power is restored before normal system operations can resume. This increases the downtime during which the aircraft cannot utilize these systems.

US 2009/0189455 teaches an electrical power distribution system with a solid state power controller as a bus tie breaker. EP 1973018 also teaches an integrated electrical power distribution system.

### SUMMARY

Disclosed is a method for minimal interruption power source switching that has the steps of monitoring power characteristics of a DC bus and a plurality of DC bus inputs, determining if a fault condition is present on the DC bus, activating a switching power source when the power characteristic falls below a threshold and no fault is present on the DC bus, and deactivating the switching power source when the power characteristic exceeds the threshold and no fault is present on the DC bus.

Also disclosed is a minimally interruptible power source having a DC power bus, a controller coupled to the DC power bus and capable of controlling power functions of the DC power bus, a solid state remote power controller (SSRPC) connecting the DC power bus to a switching power source, a plurality of electrical contactors, each of the contactors connecting one of a plurality of primary power sources to the controller, and a communication line for connecting the controller to at least one other controller within a power system.

Also disclosed is a DC power distribution system having a plurality of DC power buses, each of the DC power buses having a controller capable of controlling power functions of the DC power bus, a solid state remote power controller (SSRPC) connecting the DC power bus to a switching power source, a plurality of electrical contactors connecting one of a plurality of primary power sources to the controller, a communication line for connecting the controller to at least one other controller within a power system, and a plurality of power generators. Each of the power generators is capable of providing power to at least one of the plurality of DC power buses.

These and other features of the present invention can be best understood from the following specification and drawings, the following of which is a brief description.

### BRIEF DESCRIPTION OF THE DRAWINGS

Figure 1 schematically illustrates an example aircraft power system.
Figure 2 illustrates an example DC bus configuration that could be used in a power network.
Figure 3 illustrates an example process for switching a DC bus power source.

### DETAILED DESCRIPTION

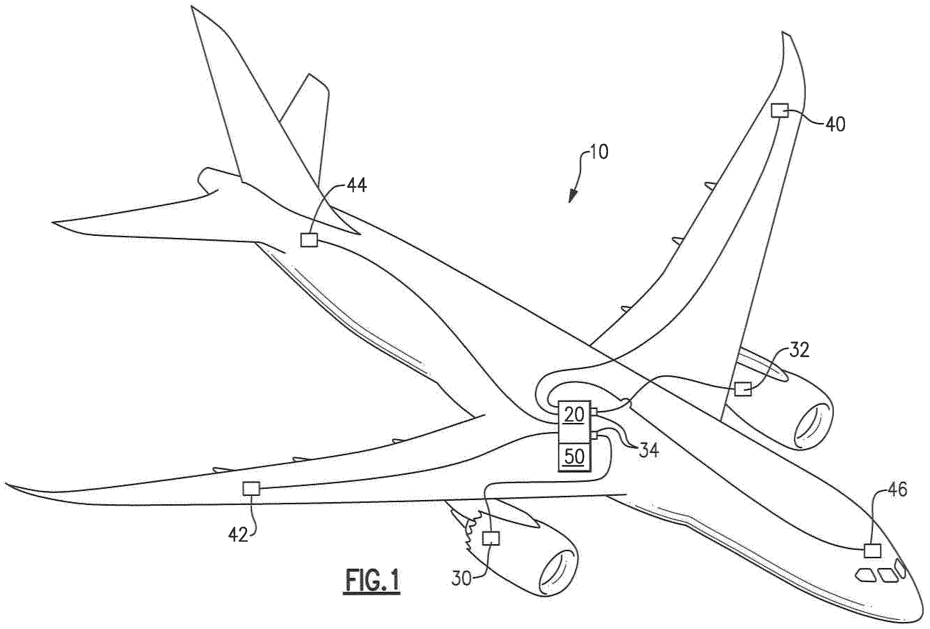

Figure 1 illustrates an aircraft 10 that has a power system for distributing power to multiple electrical systems 40, 42, 44, 46 located throughout the aircraft 10. Each of the electrical systems 40, 42, 44, 46 are flight components, sensors, controllers or other components. Alternately, one or more of the electrical systems 40, 42, 44, 46 is another DC power distribution bus relying on the DC bus 20 as a power source. Included within the power system is a DC bus 20 that is capable of receiving power from each of two connected power sources 30, 32. The power sources 30, 32 are connected to the DC bus 20 via electrical contactors 34, which can be opened or closed via a controller 50 contained within the DC bus 20 thereby controlling the electrical connection between the DC bus 20 and the power sources 30,32.

Under normal operating conditions, the DC power bus 20 receives power from only one of the power sources 30, 32 at a time. Variations from the normal operating conditions can require the DC bus 20 to switch which power source 30, 32 it is receiving power from one or more times during operation of the power system. In order to accomplish this switch, the controller 50 disconnects the currently connected power source 30, 32 by opening the contactor 34 associated with the primary power source 30, 32, and then electrically connects the secondary power source 30, 32 to the DC bus 20 by closing the contactor 34 associated with the secondary power source 30, 32. Alternately, each of the connected power sources 30, 32 could be a power distribution bus acting as a DC source for the DC bus 20.

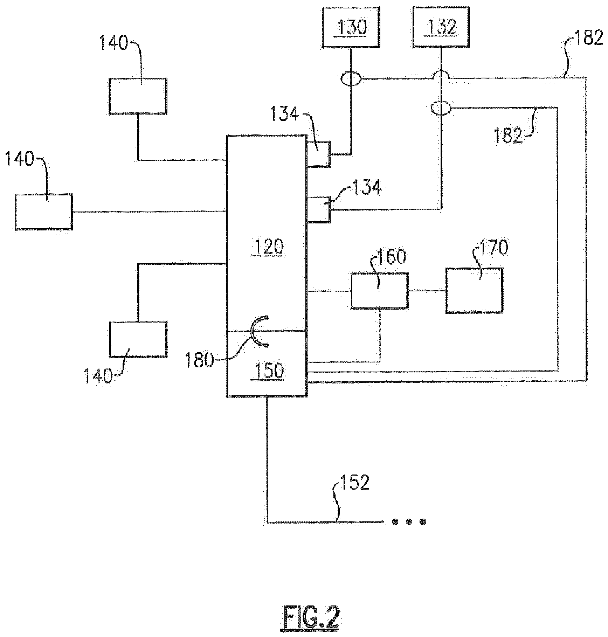

The switching process results in a downtime during which both the primary power source 30, 32 and the secondary power source 30, 32 are not connected to the DC power bus 20, and consequently, the DC power bus 20 provides no electrical power to the connected electrical systems 40, 42, 44, 46 for the duration of the downtime. In order to provide power during the downtime, a solid state remote power controller (SSRPC) (illustrated in Figure 2) can connect the DC power bus 20 to a switching power source.

Figure 2 schematically illustrates a power system using a SSRPC 160 to connect a DC bus 120 to a switching power source 170. The DC bus 120 is connected to a pair of power sources 130, 132 via contactors 134. The DC power bus 120 provides output power to multiple electrical systems 140 during normal operations. The electrical systems 140 can be aircraft systems, or further DC power distribution busses which rely on the DC power bus 120 as a power source. The controller 150 includes at least one communication line 152 for communicating with other DC power bus controllers distributed throughout a power system. The controller 150 further includes sensor input lines 180, 182 for receiving DC bus 120 voltage measurements (via input line 180) and source current measurements (via input line 182). The source current measurements and DC bus voltage measurements can be derived from any known measurement type. In one example, the source current measurements are taken using Hall effect sensors located at each of the power sources 130, 132.

The controller 150 is a field programmable gate array (FPGA) or an application specific integrated circuit (ASIC) that is capable of controlling the SSRPC 160, and thereby connecting the switching power source 170 to the DC power bus 120. The controller 150 is also capable of controlling the contactors 134 and other DC bus 120 functions. The controller 150 can turn the SSRPC 160 on when the first contactor 134 is closed and turn the SSRPC 160 off when the second contactor 134 is opened. The use of a dedicated controller 150, such as an FPGA or an ASIC, allows the SSRPC 160 to be switched on as the first contactor 134 is opened, and switched off as the second contactor 134 is closed, thereby allowing for the DC power bus 120 to receive a nearly uninterrupted power signal.

As described above, the DC power bus 120 can be used within a network of other DC power buses and can utilize other DC power buses as the power sources 130, 132. In such a case, a fault present in the DC power bus 120 can be propagated to any connected DC power buses if the faulty DC power bus 120 is not isolated. Fault propagation can be further aggravated if the method used by the controller 150 to determine that the power source 130, 132 should be switched can be falsely triggered by a DC bus controller 150. The controller 150 includes a computer readable medium that stores instructions and/or logic to implement a process capable of detecting power source 130, 132 switching and detecting a fault on the DC bus 120. The power source switching process is described in detail below.

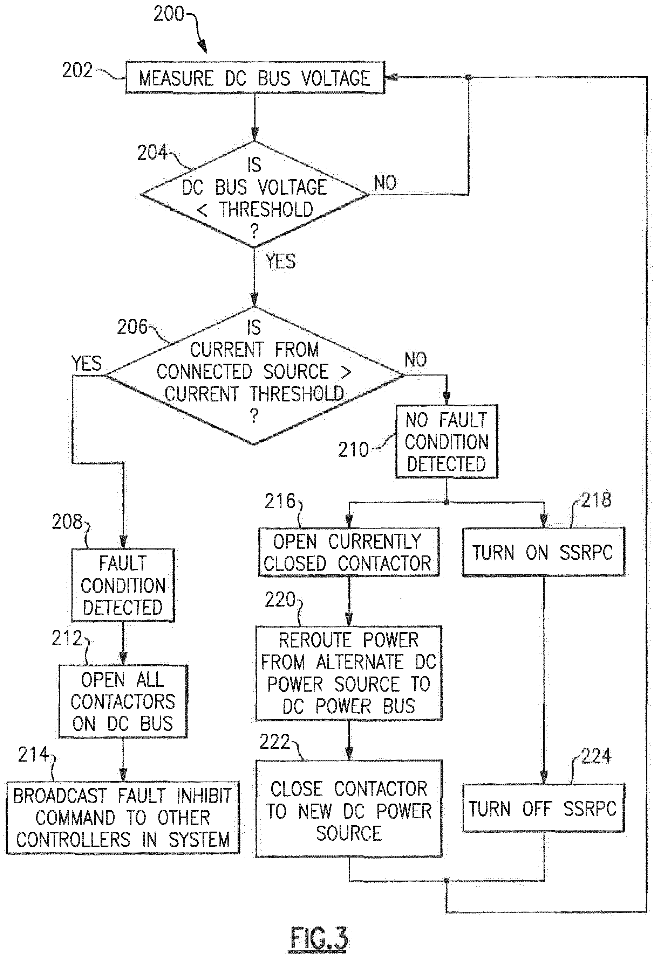

Figure 3 illustrates a process 200 for controlling the DC power bus 120 that accounts for a fault within the power bus 120, and that reduces the duration of switching downtime to a minimum. Initially the controller 150 receives a measurement of the DC bus voltage from a sensor in a "measure DC bus voltage" step 202. The DC bus voltage can be measured using any known measuring technique, and input at a DC bus voltage input line 180 on the controller 150. The controller 150 checks the DC bus voltage against a low voltage threshold in an "is DC bus voltage less than low voltage threshold" step 204. If the DC bus voltage is above the threshold, the process returns to the measure DC bus voltage step 202, and continues the process 200.

Alternately, if the DC bus voltage is lower than the threshold, one of two situations is present. In one situation, the DC bus 120 can have a fault, causing the voltage to drop extremely low, and rendering the DC bus 120 unsuitable for operation. Alternately, the power source 130, 132 providing power to the DC bus 120 could be providing little or no power to the DC bus 120, thereby requiring the DC bus controller 150 to disconnect the power source 130, 132 and redirect power from another power source 130, 132 to the DC bus 120. In order to distinguish between the two situations, the controller 150 compares a DC source current measurement with a high current threshold, in the "is current from connected source greater than current threshold" step 206. If the source current is above the current threshold, the controller 150 determines that a fault condition is present, and moves to the "fault condition detected" step 208. Alternately, if the source current does not exceed the threshold, the controller 150 determines that there is no fault within the DC bus and moves to the "no fault condition detected" step 210.

In the fault condition detected branch of the process 200, the controller 150 causes all DC source contactors 134 at the DC bus 120 to be placed in an open state in an "open all contactors on DC bus" step 212. This step causes the faulty DC bus 120 to be isolated from the power distribution system, thereby preventing the fault from propagating throughout the power distribution system. The controller 150 then broadcasts a fault inhibit command over the communication line 152 to all other DC buses in the DC power system in a "broadcast fault inhibit command to other controllers in system" step 214. The fault inhibit command is a code that identifies the DC bus 120 with the fault, and instructs the other controllers not to close any contactors connecting to the faulty DC power bus 120, thereby preventing power from being redirected through the faulty bus by other power distribution buses in the system.

In the no fault detected branch of the process 200, the controller 150 simultaneously engages two parallel paths. First, the controller 150 opens the contactor 134 connecting the current power source 130, 132 to the DC power bus 120 in the "open currently closed contactor" step 216. At the same or approximately the same time, the controller 150 turns on the SSRPC 160 in the "turn on SSRPC" step 218. Turning on the SSRPC 160 creates a direct connection between the DC power bus 120 and the switching power source 170, thereby ensuring that the DC bus 120 is only without power for the time required to sense if a fault exists and switch on the SSRPC 160.

Next the controller 150 reroutes the power distribution system so that the DC power bus 120 receives power from an alternate source 130, 132 in the "reroute power from alternate DC power source to DC power bus" step 220. Turning on the SSRPC 160 during the open currently closed contactor step 216 allows the DC power bus to receive power stored in the switching power source 170 for the duration of the "reroute power from alternate DC power source to DC power bus" step 220 during which no power sources 130, 132 are connected to the DC power bus 120, thereby preventing the attached electrical systems 140 from depowering. By way of example, the switching power source 170 could be a battery backup power source or the like.

Once the controller 150 has rerouted power from the secondary power source 130, 132, to the DC bus 120, the controller closes a contactor 134 connecting the new power source 130, 132 to the DC power bus 120 in the "close contactor to new DC power source" step 222. Simultaneously with closing the contactor 134, the controller 150 turns off the SSRPC 160 in the "turn off SSRPC" step 224. Once each of these steps has been completed, the controller 150 returns to the initial step 202 of the process 200, and begins again.

Due to the time sensitive nature of the process 200, either an application specific integrated circuit (ASIC) or a field programmable gate array (FPGA) controller is used to perform the steps of the process 200. Both ASIC and FPGA controllers are capable of performing the analysis and steps of the process in a significantly reduced time relative to currently used microcontrollers. ASICs and/or FPGAs can enable substantially parallel operations to occur in contrast to the sequential operations of microcontrollers. This allows the SSRPC 160 to be switched on within less than 10 milliseconds of a loss of power to the DC bus 120 in some examples and within less than 2 milliseconds of a loss of power to the DC bus 120 in other examples.

The above described example apparatus and method is described with regard to two possible power sources, however, a person of ordinary skill in the art would understand the system and method to apply to a DC bus using any number of possible power sources and is not limited to the express example.

Although an example embodiment has been disclosed, a worker of ordinary skill in this art would recognize that certain modifications would come within the scope of this disclosure. For that reason, the following claims should be studied to determine the true scope and content of this disclosure.

## Claims

1. A method for minimal interruption power source switching comprising the steps of:
disconnecting a first power source (30) from a DC bus (20), thereby removing power from said DC bus;
connecting a second power source (32) to said DC bus (20), thereby providing power to said DC bus; and **characterised by**
activating a solid state remote power controller (SSRPC) (150) to connect a switching power source (170) to the DC bus (20) during the step of disconnecting the first power source and deactivating the SSRPC during the step of connecting the second power source, thereby providing power to said DC bus during a time period between performance of the steps of disconnecting the first power source from said DC bus and connecting the second power source to said DC bus.

2. The method of claim 1, further comprising the steps of:
monitoring at least one power characteristics of the DC bus and a plurality of DC bus inputs; and
determining if a fault condition is present on the DC bus.

3. The method of claim 2, wherein the step of activating the solid state remote power controller (SSRPC) during the step of disconnecting the first power source and deactivating the SSRPC during the step of connecting the second power source comprises the steps of:
activating the SSRPC when at least one of said power characteristics falls below a threshold and no fault is present on the DC bus; and
deactivating the SSRPC when the at least one of said power characteristics exceeds the threshold and no fault is present on the DC bus.

4. The method of claim 2, wherein said step of monitoring power characteristics of a DC bus comprises the steps of:
monitoring a DC bus voltage using a controller; and
monitoring a DC bus input current from each of multiple DC sources connected to said DC bus.

5. The method of claim 4, wherein the step of monitoring the DC bus input current comprises receiving at least one Hall effect sensor reading.

6. The method of claim 4, wherein said step of determining if a fault condition is present on the DC bus comprises the steps of:
comparing the DC bus voltage to a low voltage threshold;
comparing the DC bus input current to a high current threshold; and
determining a fault condition exists in said DC bus when the DC bus voltage is under the low voltage threshold and the DC bus input current is over the high current threshold.

7. The method of claim 2, further comprising the step of rerouting power from a primary power source to a secondary power source when the DC bus voltage falls below a low voltage threshold and no fault is present in the DC bus.

8. The method of claim 2, further comprising the step of opening each of a plurality of contactors connecting DC sources to said DC bus when a fault is detected.

9. The method of claim 8, further comprising the step of broadcasting a fault inhibit command, thereby preventing other controllers from closing said plurality of contactors.

10. The method of claim 2, wherein said steps of activating the SSRPC and deactivating the SSRPC result in said DC bus being disconnected from a voltage source for a duration less than 10 milliseconds, and preferably wherein said duration is less than 2 milliseconds.

11. The method of claim 2, wherein the method is performed using a field programmable gate array (FPGA), or wherein the method is performed using an application specific integrated circuit (ASIC).

12. The method of claim 2, further comprising the steps of opening a closed DC bus contactor when said at least one of said power characteristics falls below a threshold and no fault is present on the DC bus, thereby disconnecting a primary power source from said DC bus; and
closing an open DC bus contactor when said at least one of said power characteristics falls below a threshold and no fault is present on the DC bus, thereby connecting an alternate power source to said DC bus.

13. A minimally interruptible power source comprising:
a DC power bus (20);
a controller (50), coupled to said DC power bus, said controller being capable of controlling power functions of said DC power bus; and **characterised by**
a solid state remote power controller (SSRPC) (160) configured to connect a switching power source to the DC power bus while a first power source is being disconnected from the DC power bus and configured to disconnect the switching power source from the DC power bus when a second power source is connected to the DC power bus;
a plurality of electrical contactors (40, 42, 44, 46), each of said contactors operable to connect one of the first and second power sources to said DC power bus; and
a communication line (152) for connecting said controller to at least one other controller within a power system.

14. The minimally interruptible power source of claim 13, further comprising a DC bus voltage sensor connected to said DC power bus and said controller, thereby allowing said controller to measure a voltage on said DC power bus, or further comprising a plurality of DC input current sensors, each of said input current sensors being connected to a power source input, thereby allowing said controller to measure a DC input current associated with each power source.

15. A DC power distribution system comprising a plurality of minimally interruptible power sources of claim 13 or 14, said plurality of power sources comprising:
a plurality of DC power buses (120), each of said DC power buses having a controller (150) capable of controlling power functions of said DC power bus, a solid state remote power controller (SSRPC) (160) connecting said DC power bus to a switching power source, a plurality of electrical contactors (40, 42, 44, 46), each of said contactors connecting one of a plurality of primary power sources to said controller, a communication line (152) for connecting said controller to at least one other controller within a power system; and
a plurality of power generators (130, 132), each of said power generators being capable of providing power to at least one of said plurality of DC power buses.

## Patentansprüche

1. Verfahren zum Umschalten einer Stromquelle mit minimaler Unterbrechung, folgende Schritte umfassend:
Trennen einer ersten Stromquelle (30) von einer Gleichstromsammelschiene (20), wodurch die Stromversorgung der Gleichstromsammelschiene unterbrochen wird;
Verbinden einer zweiten Stromquelle (32) mit der Gleichstromsammelschiene (20), wodurch die Gleichstromsammelschiene mit Strom versorgt wird; und **gekennzeichnet durch**
Aktivieren einer Halbleiter-Remote-Leistungssteuerung (SSRPC) (150) zum Verbinden einer umschaltenden Stromquelle (170) mit der Gleichstromsammelschiene (20) während des Schritts des Trennens der ersten Stromquelle und Deaktivieren der SSRPC während des Schritts des Verbindens der zweiten Stromquelle, wodurch die Gleichstromsammelschiene in einer Zeitspanne zwischen dem Ausführen der Schritte des Trennens der ersten Stromquelle von der Gleichstromsammelschiene und des Verbindens der zweiten Stromquelle mit der Gleichstromsammelschiene mit Strom versorgt wird.

2. Verfahren nach Anspruch 1, ferner folgende Schritte umfassend:
Überwachen von wenigstens einer Stromkennlinie der Gleichstromsammelschiene und einer Vielzahl von Gleichstromsammelschieneneingänge; und
Bestimmen, ob ein Fehlerzustand an der Gleichstromsammelschiene vorliegt.

3. Verfahren nach Anspruch 2, wobei der Schritt des Aktivierens der Halbleiter-Remote-Leistungssteuerung (SSRPC) während des Schritts des Trennens der ersten Stromquelle und des Aktivierens der SSRPC während des Schritts des Verbindens der zweiten Stromquelle folgende Schritte umfasst:
Aktivieren der SSRPC, wenn wenigstens eine der Stromkennlinie unter einen Schwellenwert fällt und kein Fehler an der Gleichstromsammelschiene vorliegt; und
Deaktivieren der SSRPC, wenn wenigstens eine der Stromkennlinie den Schwellenwert übersteigt kein Fehler an der Gleichstromsammelschiene vorliegt.

4. Verfahren nach Anspruch 2, wobei der Schritt des Überwachens von Stromkennlinien einer Gleichstromsammelschiene folgende Schritte umfasst:
Überwachen einer Gleichstromsammelschienenspannung mithilfe einer Steuerung; und
Überwachen eines Gleichstromsammelschienensammelstroms von einer jeden von mehreren Gleichstromquellen, die mit der Gleichstromsammelschiene verbunden sind.

5. Verfahren nach Anspruch 4, wobei der Schritt des Überwachens des Gleichstromsammelschieneneingangsstroms das Empfangen von wenigstens einem Hall-Effekt-Sensormesswert umfasst.

6. Verfahren nach Anspruch 4, wobei der Schritt des Bestimmens, ob ein Fehlerzustand an der Gleichstromsammelschiene vorliegt, folgende Schritte umfasst:
Vergleichen der Gleichstromsammelschienenspannung mit einem niedrigen Spannungsschwellenwert;
Vergleichen des Gleichstromsammelschieneneingangsstroms mit einem hohen Stromschwellenwert; und
Bestimmen, dass ein Fehlerzustand an der Gleichstromsammelschiene vorliegt, wenn die Gleichstromsammelschienenspannung unter dem niedrigen Spannungsschwellenwert liegt und der Gleichstromsammelschieneneingangsstrom über dem hohen Stromschwellenwert liegt.

7. Verfahren nach Anspruch 2, ferner umfassend den Schritt des Umleitens von Strom von einer Primärstromquelle zu einer Sekundärstromquelle, wenn die Gleichstromsammelschienenspannung unter einen niedrigen Spannungsschwellenwert fällt und kein Fehler an der Gleichstromsammelschiene vorliegt.

8. Verfahren nach Anspruch 2, ferner umfassend den Schritt des Öffnens eines jeden einer Mehrzahl von Schützen, die Gleichstromquellen mit der Gleichstromsammelschiene verbinden, wenn ein Fehler erkannt wird.

9. Verfahren nach Anspruch 8, ferner umfassend den Schritt des Aussendens eines Fehlerunterdrückungsbefehls, wodurch verhindert wird, dass andere Steuerungen die Mehrzahl von Schützen schließen.

10. Verfahren nach Anspruch 2, wobei die Schritte des Aktivierens der SSRPC und des Deaktivierens der SSRPC bewirken, dass die Gleichstromsammelschiene für eine Dauer von weniger als 10 Millisekunden von einer Spannungsquelle getrennt ist, wobei die Dauer vorzugsweise weniger als 2 Millisekunden beträgt.

11. Verfahren nach Anspruch 2, wobei das Verfahren mithilfe eines feldprogrammierbaren Gate-Arrays (FPGA) durchgeführt wird, oder wobei das Verfahren mithilfe einer anwendungsspezifischen integrierten Schaltung (ASIC) durchgeführt wird.

12. Verfahren nach Anspruch 2, ferner folgende Schritte umfassend: Öffnen eines geschlossenen Gleichstromsammelschienenschützes, wenn die wenigstens eine der Stromkennlinien unter einen Schwellenwert fällt und kein Fehler an der Gleichstromsammelschiene vorliegt, wodurch eine primäre Stromquelle von der Gleichstromsammelschiene getrennt wird; und
Schließen eines offenen Gleichstromsammelschienenschützes, wenn die wenigstens eine der Stromkennlinien unter einen Schwellenwert fällt und kein Fehler an der Gleichstromsammelschiene vorliegt, wodurch eine alternative Stromquelle mit der Gleichstromsammelschiene verbunden wird.

13. Minimal unterbrechbare Stromquelle, umfassend:
eine Gleichstromsammelschiene (20);
eine Steuerung (50), die an die Gleichstromsammelschiene gekoppelt ist, wobei die Steuerung Stromfunktionen der Gleichstromsammelschiene steuern kann; und **gekennzeichnet durch**
eine Halbleiter-Remote-Leistungssteuerung (SSRPC) (160), die dazu konfiguriert ist, eine umschaltende Stromquelle mit der Gleichstromsammelschiene zu verbinden, während eine erste Stromquelle von der Gleichstromsammelschiene getrennt ist, und dazu konfiguriert ist, die umschaltende Stromquelle von der Gleichstromsammelschiene zu trennen, wenn die zweite Stromquelle mit der Gleichstromsammelschiene verbunden ist;
eine Mehrzahl elektrischer Schütze (40, 42, 44, 46), wobei jedes der Schütze betriebsfähig ist, um eine von der ersten und zweiten Stromquelle mit der Gleichstromsammelschiene zu verbinden; und
eine Datenübertragungsleitung (152) zum Verbinden der Steuerung mit wenigstens einer weiteren Steuerung in einem Stromsystem.

14. Minimal unterbrechbare Stromquelle nach Anspruch 13, ferner umfassend einen Gleichstromsammelschienenspannungssensor, der mit der Gleichstromsammelschiene und der Steuerung verbunden ist, wodurch die Steuerung eine Spannung an der Gleichstromsammelschiene messen kann, oder ferner umfassend eine Mehrzahl von Gleichstromeingangssensoren, wobei jeder Eingangsstromsensoren mit einem Stromquelleneingang verbunden ist, wodurch die Steuerung einen Gleichstromeingang im Zusammenhang mit den einzelnen Stromquellen messen kann.

15. Gleichstromverteilungssystem, umfassend eine Mehrzahl minimal unterbrechbare Stromquellen nach Anspruch 13 oder 14, wobei die Mehrzahl von Stromquellen Folgendes umfasst:
eine Mehrzahl von Gleichstromsammelschienen (120), wobei jede der Gleichstromsammelschiene eine Steuerung (150) aufweist, die Stromfunktionen der Gleichstromsammelschiene steuern kann, eine Halbleiter-Remote-Leistungssteuerung (SSRPC) (160), die die Gleichstromsammelschiene mit einer umschaltenden Stromquelle verbindet, eine Mehrzahl elektrischer Schütze (40, 42, 44, 46), wobei jedes der Schütze eine von einer Mehrzahl von Stromquellen mit der Steuerung verbindet, eine Datenübertragungsleitung (152) zum Verbinden der Steuerung mit wenigstens einer weiteren Steuerung in einem Stromsystem; und
eine Mehrzahl von Stromgeneratoren (130, 132), wobei ein jeder der Stromgeneratoren wenigstens eine der Mehrzahl von Gleichstromsammelschienen mit Strom versorgen kann.

## Revendications

1. Procédé de commutation de source d'alimentation à interruption minimale comprenant les étapes consistant à :
déconnecter une première source d'alimentation (30) d'un bus CC (20), éliminant ainsi une alimentation depuis ledit bus CC ;
connecter une seconde source d'alimentation (32) audit bus CC (20), fournissant ainsi une alimentation audit bus CC ; et **caractérisé par**
l'activation d'un dispositif de commande d'alimentation à distance à semi-conducteurs (SSRPC) (150) pour connecter une source d'alimentation de commutation (170) au bus CC (20) pendant l'étape consistant à déconnecter la première source d'alimentation et à désactiver le SSRPC pendant l'étape consistant à connecter la seconde source d'alimentation, fournissant ainsi une alimentation audit bus CC pendant une période de temps entre l'exécution des étapes consistant à déconnecter la première source d'alimentation dudit bus CC et à connecter la seconde source d'alimentation audit bus CC.

2. Procédé selon la revendication 1, comprenant en outre les étapes consistant à :
surveiller au moins une caractéristique d'alimentation du bus CC et une pluralité d'entrées de bus CC ; et
déterminer si une condition de défaut est présente sur le bus CC.

3. Procédé selon la revendication 2, dans lequel l'étape consistant à activer le dispositif de commande d'alimentation à distance à semi-conducteurs (SSRPC) pendant l'étape consistant à déconnecter la première source d'alimentation et à désactiver le SSRPC pendant l'étape consistant à connecter la seconde source d'alimentation comprend les étapes consistant à :
activer le SSRPC lorsqu'au moins l'une desdites caractéristiques d'alimentation tombe au-dessous d'un seuil et qu'aucun défaut n'est présent sur le bus CC ; et
désactiver le SSRPC lorsque l'au moins une desdites caractéristiques d'alimentation dépasse le seuil et qu'aucun défaut n'est présent sur le bus CC.

4. Procédé selon la revendication 2, dans lequel ladite étape de surveillance de caractéristiques d'alimentation d'un bus CC comprend les étapes consistant à :
surveiller une tension de bus CC en utilisant un dispositif de commande ; et
surveiller un courant d'entrée de bus CC depuis chacune de multiples sources CC connectées audit bus CC.

5. Procédé selon la revendication 4, dans lequel l'étape consistant à surveiller le courant d'entrée de bus CC comprend la réception d'au moins une lecture de capteur à effet Hall.

6. Procédé selon la revendication 4, dans lequel ladite étape consistant à déterminer si une condition de défaut est présente sur le bus CC comprend les étapes consistant à :
comparer la tension de bus CC à un seuil de basse tension ;
comparer le courant d'entrée de bus CC à un seuil de courant élevé ; et
déterminer qu'une condition de défaut existe dans ledit bus CC lorsque la tension de bus CC est en dessous du seuil de basse tension et que le courant d'entrée de bus CC est supérieur au seuil de courant élevé.

7. Procédé selon la revendication 2, comprenant en outre l'étape consistant à réacheminer une alimentation depuis une source d'alimentation primaire vers une source d'alimentation secondaire lorsque la tension de bus CC tombe au-dessous d'un seuil de basse tension et qu'aucun défaut n'est présent dans le bus CC.

8. Procédé selon la revendication 2, comprenant en outre l'étape consistant à ouvrir chacun d'une pluralité de contacteurs connectant des sources CC audit bus CC lorsqu'un défaut est détecté.

9. Procédé selon la revendication 8, comprenant en outre l'étape consistant à diffuser une commande d'inhibition de défauts, empêchant ainsi d'autres dispositifs de commande de fermer ladite pluralité de contacteurs.

10. Procédé selon la revendication 2, dans lequel lesdites étapes consistant à activer le SSRPC et à désactiver le SSRPC entraînent la déconnexion dudit bus CC depuis une source de tension pendant une durée inférieure à 10 millisecondes, et de préférence dans lequel ladite durée est inférieure à 2 millisecondes.

11. Procédé selon la revendication 2, dans lequel le procédé est exécuté en utilisant un réseau prédiffusé programmable (FPGA), ou dans lequel le procédé est exécuté en utilisant un circuit intégré à application spécifique (ASIC).

12. Procédé selon la revendication 2, comprenant en outre les étapes consistant à ouvrir un contacteur de bus CC fermé lorsque ladite au moins une desdites caractéristiques d'alimentation tombe au-dessous d'un seuil et qu'aucun défaut n'est présent sur le bus CC, déconnectant ainsi une source d'alimentation primaire dudit bus CC ; et
fermer un contacteur de bus CC ouvert lorsque ladite au moins une desdites caractéristiques d'alimentation tombe au-dessous d'un seuil et qu'aucun défaut n'est présent sur le bus CC, connectant ainsi une autre source d'alimentation audit bus CC.

13. Source d'alimentation interruptible minimale comprenant :
un bus d'alimentation CC (20) ;
un dispositif de commande (50), couplé audit bus d'alimentation CC, ledit dispositif de commande pouvant commander des fonctions d'alimentation dudit bus d'alimentation CC ; et **caractérisée par**
un dispositif de commande d'alimentation à distance à semi-conducteurs (SSRPC) (160) configuré pour connecter une source d'alimentation de commutation au bus d'alimentation CC pendant qu'une première source d'alimentation est déconnectée du bus d'alimentation CC et configuré pour déconnecter la source d'alimentation de commutation du bus d'alimentation CC lorsqu'une seconde source d'alimentation est connectée au bus d'alimentation CC ;
une pluralité de contacteurs électriques (40, 42, 44, 46), chacun desdits contacteurs servant à connecter l'une parmi les première et seconde sources d'alimentation audit bus d'alimentation CC ; et
une ligne de communication (152) pour connecter ledit dispositif de commande à au moins un autre dispositif de commande à l'intérieur d'un système d'alimentation.

14. Source d'alimentation interruptible minimale selon la revendication 13, comprenant en outre un capteur de tension de bus CC connecté audit bus d'alimentation CC et audit dispositif de commande, permettant ainsi audit dispositif de commande de mesurer une tension sur ledit bus d'alimentation CC, ou comprenant en outre une pluralité de capteurs de courant d'entrée CC, chacun desdits capteurs de courant d'entrée étant connecté à une entrée de source d'alimentation, permettant ainsi audit dispositif de commande de mesurer un courant d'entrée CC associé à chaque source d'alimentation.

15. Système de distribution d'alimentation CC comprenant une pluralité de sources d'alimentation interruptibles minimales selon la revendication 13 ou 14, ladite pluralité de sources d'alimentation comprenant :
une pluralité de bus d'alimentation CC (120), chacun desdits bus d'alimentation CC ayant un dispositif de commande (150) pouvant commander des fonctions d'alimentation dudit bus d'alimentation CC, un dispositif de commande d'alimentation à distance à semi-conducteurs (SSRPC) (160) connectant ledit bus d'alimentation CC à une source d'alimentation de commutation, une pluralité de contacteurs électriques (40, 42, 44, 46), chacun desdits contacteurs connectant l'une d'une pluralité de sources d'alimentation primaires audit dispositif de commande, une ligne de communication (152) pour connecter ledit dispositif de commande à au moins un autre dispositif de commande à l'intérieur d'un système d'alimentation ; et
une pluralité de générateurs d'alimentation (130, 132), chacun desdits générateurs d'alimentation pouvant fournir une alimentation à au moins l'un de ladite pluralité de bus d'alimentation CC.
